# EUROPÄISCHE PATENTANMELDUNG

(11) **EP 2 063 286 A1**
(43) Veröffentlichungstag der Anmeldung: **27.05.2009**
(21) Anmeldenummer: 08105396.9
(22) Anmeldetag: 19.09.2008
(51) Int. Cl.: G01S 5/14, G08G 1/16

(54) **Verfahren zum Bestimmen einer Position eines Fahrzeugs**

(30) Priorität: 15.11.2007 DE 102007054509
(71) Anmelder: ROBERT BOSCH GMBH, 70442 Stuttgart (DE)
(72) Erfinder: Moennich, Joerg, 01159 Dresden (DE); Schaaf, Gunther, 70806 Kornwestheim (DE); Haug, Matthias, 70469 Stuttgart (DE)

(57) **Zusammenfassung**

Verfahren zum Bestimmen einer Position eines Fahrzeugs (2), bei dem erste Informationen (13), die von einem Positionsbestimmungssystem bereitgestellt werden, und zweite Informationen (18), die von mindestens einer stationär installierten Einrichtung (16) bereitgestellt werden und von den ersten Informationen (13) unabhängig sind, kombiniert werden. Außerdem betrifft die Erfindung eine Vorrichtung (4) zum Bestimmen einer Position eines Fahrzeugs (2), ein Computerprogramm und ein Computerprogrammprodukt.

## Beschreibung

Die Erfindung betrifft ein Verfahren zum Bestimmen einer Position eines Fahrzeugs, eine Vorrichtung zum Bestimmen einer Position eines Fahrzeugs, ein Computerprogramm und ein Computerprogrammprodukt.

### Stand der Technik

Zur Bestimmung einer Position eines Fahrzeugs, insbesondere eines Kraftfahrzeugs, sind unterschiedliche Verfahren bekannt. So wird bspw. in der Druckschrift WO 95/31798 A1 ein Antikollisionssystem für Kraftfahrzeuge vorgestellt, bei dem eine Positionsbestimmung von Kraftfahrzeugen benutzt wird. Hierzu werden Detektoren verwendet, die als Kontaktschleifen ausgebildet sind und unter einer Fahrbahndecke angeordnet sind. Diese Detektoren kommunizieren mit den Fahrzeugen. Weiterhin sind die Detektoren mit einer Zentraleinheit vernetzt, so dass gleichzeitig Positionen und Bewegungen mehrerer Fahrzeuge bestimmt werden können. Weiterhin können Fahrer von Fahrzeugen insbesondere an Kreuzungen vor Gefahren durch detektierte herannahende Fahrzeuge gewarnt werden.

Bekannt sind ebenfalls Navigationssysteme, die eine für ein Fahrzeug ermittelte GPS-Position durch Erfassen der Eigenbewegung des Fahrzeugs stützen und so eine höhere Genauigkeit erreichen.

### Offenbarung der Erfindung

Die Erfindung betrifft ein Verfahren zum Bestimmen einer Position eines Fahrzeugs, bei dem erste Informationen, die von einem Positionsbestimmungssystem bereitgestellt werden, und zweite Informationen, die von mindestens einer stationär installierten Einrichtung bereitgestellt werden und von den ersten Informationen unabhängig sind, kombiniert werden.

In Ausgestaltung werden die ersten Informationen durch ein globales, bspw. satellitengestütztes, Positionsbestimmungssystem oder Navigationssystem, insbesondere GPS (Global Positioning System), bereitgestellt. In der Regel wird ein ortsungebundenes, räumlich verteiltes globales Positionsbestimmungssystem verwendet, wohingegen für die mindestens eine stationär installierte Einrichtung typischerweise eine ortsgebundene Einrichtung bzw. Infrastruktureinrichtung oder Straßenverkehrsinfrastruktureinrichtung benutzt wird, so dass die stationär installierte Einrichtung bspw. straßengebunden ist.

Die Erfindung ist u. a. dazu geeignet, die von dem Positionsbestimmungssystem bereitgestellten ersten Informationen durch die zweiten Informationen zu ergänzen, so dass insgesamt die Position des Fahrzeugs genauer bestimmt werden kann. Demnach ist es auch möglich, dass die ersten Informationen mit den zweiten Informationen korrigiert werden, da die zweiten Informationen üblicherweise genauer oder zuverlässiger als die ersten Informationen sind.

Bei dem Verfahren werden folglich zwei unterschiedliche Informationsquellen, nämlich eine erste Informationsquelle, in der Regel das Positionsbestimmungssystem, für die ersten Informationen und die zweite Informationsquelle, in der Regel die stationär installierte Einrichtung, für die zweiten Informationen benutzt. Nur somit ist eine sinnvolle Ergänzung beider Informationen sowie eine ggf. vorzunehmende Korrektur der ersten Informationen durch die zweiten Informationen möglich.

Falls die zweiten Informationen von einer stationär installierten Einrichtung stammen sollten, die als ein Modul des Positionsbestimmungssystems ausgebildet sein sollte, ist eine Unabhängigkeit der Informationen nicht gewährleistet, da in diesem Fall auch die zweiten Informationen von dem Positionsbestimmungssystem bereitgestellt werden, so dass es sich bei derartigen zweiten Informationen ebenfalls um erste Informationen handelt, da in dieser Situation sämtliche Informationen von dem Positionsbestimmungssystem bereitgestellt werden.

Es ist u.a. vorgesehen, dass die zweiten Informationen bereitgestellt werden, wenn sich das Fahrzeug in der Nähe der mindestens einen ortsgebundenen Einrichtung befindet.

In einer Variante können mindestens ein in dem Fahrzeug angeordnetes zweites Ortungsmodul und die mindestens eine Einrichtung zur Bereitstellung der zweiten Informationen miteinander wechselwirken, wobei diese zweiten Informationen typischerweise durch elektromagnetische Wellen über Signal drahtlos übermittelt werden.

Bei einer Wechselwirkung des zweiten Ortungsmoduls mit der stationär installierten Einrichtung kann eine in der Regel einseitige oder auch gegenseitige Ortung vorgesehen sein. So besteht die Möglichkeit, dass die stationär installierte Einrichtung die Position des Ortungsmoduls und/oder des Fahrzeugs bspw. aktiv bestimmt und als eine zweite Information die Absolutposition des Fahrzeugs dem Ortungsmodul bereitstellt. Die Position wird dabei relativ zur stationär installierten Einrichtung bzw. Infrastruktureinrichtung bestimmt. Die Absolutposition des Fahrzeugs ergibt sich aus der Absolutposition der Infrastruktureinrichtung und der Relativposition des Fahrzeugs und wird dem zweiten Ortungsmodul als zweite Information bereitgestellt. Umgekehrt kann auch das Ortungsmodul die Position der stationär installierten Einrichtung bestimmen und als zweite Information weiterverarbeiten. Es ist auch möglich, dass die stationär installierte Einrichtung Informationen über den Ort ihrer Installation aussendet, die von dem Ortungsmodul empfangen und als zweite Informationen weiterverarbeitet werden. Alternativ oder ergänzend können die stationär installierte Einrichtung und das Ortungsmodul des Fahrzeugs zur Bereitstellung der zweiten Informationen kommunizieren. In Ausgestaltung sollte zumindest das Ortungsmodul im Fahrzeug dazu ausgebildet sein, sämtliche genannten Optionen, die zumindest zu einer einseitigen Ortung geeignet sind, auszuführen, da in der Regel nicht gewährleistet ist, dass eine stationär installierte Einrichtung zur aktiven Ortung geeignet ist, so dass eine derartige stationär installierte Einrichtung die zweiten Informationen nur passiv bereitstellen kann.

Die erfindungsgemäße Vorrichtung zum Bestimmen einer Position eines Fahrzeugs ist dazu ausgebildet, erste Informationen, die von einem Positionsbestimmungssystem bereitgestellt werden, und zweite Informationen, die von einer stationär installierten Einrichtung bereitgestellt werden und von den ersten Informationen unabhängig sind bzw. unabhängig von diesen gewonnen bzw. erfasst werden, zu kombinieren.

Dabei kann die Vorrichtung in dem Fahrzeug angeordnet sein. Die Vorrichtung weist mindestens ein erstes Ortungsmodul auf, das dazu ausgebildet ist, die ersten Informationen von dem globalen Positionsbestimmungssystem zu empfangen. Außerdem weist die Vorrichtung typischerweise mindestens ein zweites Ortungsmodul auf, das dazu ausgebildet ist, zweite Informationen von der mindestens einen Einrichtung zu empfangen. Das mindestens eine erste Ortungsmodul und das mindestens eine zweite Ortungsmodul führen die ihnen zugewiesenen Funktionen, d. h. eine Ermittlung oder Erfassung der jeweils für dieses mindestens eine Ortungsmodul bereitgestellten und demnach vorgesehenen Informationen unabhängig voneinander durch. Hierzu erfasst das mindestens eine erste Ortungsmodul die ersten Informationen von einer ersten Informationsquelle, hier dem Positionsbestimmungssystem, und das mindestens eine zweite Ortungsmodul die zweiten Informationen von einer zweiten Informationsquelle, hier der stationär installierten Einrichtung. Da die Informationen von voneinander unabhängigen Informationsquellen bereitgestellt werden, werden diese Informationen bspw. über sich voneinander unterscheidenden elektromagnetischen Wellen übermittelt, so dass sich die beschriebenen ersten und zweiten Ortungsmodule strukturell voneinander unterscheiden können. Die ersten und zweiten Informationen werden typischerweise erst in einer Datenverarbeitungseinrichtung der Vorrichtung zusammengeführt und kombiniert.

Die beschriebene Vorrichtung ist dazu ausgebildet, sämtliche Schritte des vorgestellten Verfahrens durchzuführen. Dabei können einzelne Schritte dieses Verfahrens auch von einzelnen Komponenten der Vorrichtung durchgeführt werden. Weiterhin können Funktionen der Vorrichtung oder Funktionen von einzelnen Komponenten der Vorrichtung als Schritte des Verfahrens umgesetzt werden.

Die voneinander unabhängigen Informationen werden erst bei Durchführung des Verfahrens, in der Regel durch die Vorrichtung, die zur Durchführung des Verfahrens vorgesehen ist, unter Nutzung der voneinander unabhängigen Informationsquellen kombiniert. In einer Variante der Erfindung ist nur unter Nutzung unabhängiger und demnach üblicherweise voneinander unterschiedlicher Informationen aus voneinander unabhängigen und somit unterschiedlichen Informationsquellen eine objektive, bestmögliche Bestimmung der Position des Fahrzeugs durchführbar.

Die Erfindung betrifft weiterhin ein Computerprogramm mit Programmcodemitteln, um alle Schritte eines beschriebenen Verfahrens durchzuführen, wenn das Computerprogramm auf einem Computer oder einer entsprechenden Recheneinheit, insbesondere in einer erfindungsgemäßen Vorrichtung, ausgeführt wird.

Das erfindungsgemäße Computerprogrammprodukt mit Programmcodemitteln, die auf einem computerlesbaren Datenträger gespeichert sind, ist zum Durchführen aller Schritte eines beschriebenen Verfahrens ausgebildet, wenn das Computerprogramm auf einem Computer oder einer entsprechenden Recheneinheit, insbesondere in einer erfindungsgemäßen Vorrichtung, ausgeführt wird.

Die Erfindung betrifft somit u. a. eine Stützung eines Navigationssystems durch Daten stationärer externer Sensoren als stationär installierte Einrichtungen und dient einer Verbesserung der Positionsbestimmung. Hierbei kann eine sog. "Car to Infrastructure"-Hardware, zur Bereitstellung eines Informationsaustausches zwischen Ortungsmodulen, die evtl. schon im Fahrzeug vorhanden ist, und infrastrukturellen Einrichtungen genutzt werden.

Folglich ist auch die Nutzung einer bestehenden Infrastruktur, d. h. stationär installierter Einrichtungen, wie bspw. Kontaktschleifen oder Registrierungsvorrichtungen eines Mautsystems, möglich. Außerdem ist die Erfindung auch ohne zusätzliche Hardware im Fahrzeug realisierbar. Eine Eichung einer Navigationskarte zur Positionsbestimmung, wie sie typischerweise auf Grundlage der ersten Informationen bereitgestellt wird, ist durch Ergänzung der zweiten Informationen einfach durchführbar. Die Erfindung stellt in einer Variante an lokalen Stellen eine Alternative zum DGPS (Differential Global Positioning System), mit dem über Referenzantennen Korrekturdaten ausgesendet werden, dar. Weiterhin wird das Navigationssystem im Rahmen der Erfindung auch in GPS-Funklöchern wie Tunneln usw. mit Positionsdaten versorgt

Die Erfindung ermöglicht es, Navigationssystemen bzw. Fahrerassistenzsystemen, die auf Navigationsdaten zugreifen, die mit GPS ermittelte Fahrzeugposition durch die Daten externer Sensoren zu stützen. Fahrzeug und externe Sensoren können hierzu mit geeigneter Kommunikationshardware und -software ausgestattet sein.

Durch straßenseitig stationär installierte Sensoren, wie z.B. Kontaktschleifen, IR-Kameras oder Videokameras, können Fahrzeuge erkannt und exakt lokalisiert werden. Insbesondere bei Kontaktschleifen ist die örtliche Lage des Fahrzeugs beim Überfahren genau bekannt. Ort und Zeitpunkt der Lokalisierung können dann über einen geeigneten Kommunikationskanal wie z.B. WLAN an das Fahrzeug gesendet werden. Durch die so ermittelte Position kann die GPS-Position gestützt werden und die Genauigkeit der Positionsermittlung erhöht werden.

In der Regel kann die stationär installierte Einrichtung bspw. auch als Straßenverkehrs- oder generell als Verkehrsinfrastruktureinrichtung ausgebildet sein, was bedeutet, dass die stationär installierte Einrichtung in Ausgestaltung für den Verkehr oder Straßenverkehr ausgebildet ist, so dass es sich bei der stationär installierten Einrichtung um eine ohnehin für den Straßenverkehr vorgesehene Einrichtung handeln kann. Falls als stationär installierte Einrichtung eine Markierung oder ein Verkehrsschild bzw. Verkehrszeichen vorgesehen ist, so kann auch von der Markierung oder dem Verkehrszeichen die zweite Information bspw. über elektromagnetische Wellen drahtlos bereitgestellt werden. Alternativ kann das Fahrzeug als ein mit dem Verkehrszeichen wechselwirkendes Ortungsmodul oder als Komponente eines derartigen Ortungsmoduls ein geeignetes System, bspw. eine Kamera, einen Laserscanner, einen RFID-Empfänger usw., aufweisen, die von dem Verkehrszeichen bereitgestellte Informationen liest, so dass diese als zweite Informationen zum Bestimmen der Position benutzt werden. So sind hierfür Verkehrszeichen zur Markierung von Streckenabschnitten geeignet, die einem Fahrer angeben, an welchem Streckenkilometer er sich entlang einer befahrenen Straße befindet. In der Regel können Verkehrszeichen als stationär installierte Einrichtungen auch lesbare Module umfassen, die die zweiten Informationen in einem Umkreis weniger Meter bereitstellen, so dass die zweiten Informationen bspw. von einem auf der Straße vorbeifahrenden Fahrzeug aus elektronisch gelesen werden können, ohne dem Fahrer sichtbar zu sein. In diesem Kontext sind auch Kontaktschleifen, die in der Fahrbahn angeordnet sind, als Verkehrsinfrastruktureinrichtungen ausgebildet. Die Verkehrsinfrastruktureinrichtungen können auch derart ausgebildet sein, dass sie die Position eines vorbeifahrenden Fahrzeugs, üblicherweise eines Ortungsmoduls des Fahrzeugs, bestimmen und die bestimmte Position als zweite Information bereitstellen.

In der Regel ist jedoch vorgesehen, dass die stationär installierte Einrichtung bzw. die Infrastruktureinrichtung die Position des Fahrzeugs erfasst und dem Fahrzeug über die zweiten Informationen bereitstellt.

Beispielsweise kann beim Empfang einer Lokalisierungsinformation durch eine externe Sensorik als stationär installierte Einrichtung die GPS-Position korrigiert werden. Des weiteren ist es möglich, die GPS-Position auch im weiteren Verlauf um den berechneten Fehler zu korrigieren. Insbesondere Navigationssysteme aber auch alle anderen Systeme im Fahrzeug, wie beispielsweise Fahrerassistenzsysteme, die eine hochgenaue Ortung benötigen, profitieren von dem Verfahren. Zudem kann eine straßengenaue Ortung lokal spurgenau erfolgen, womit sich insbesondere auf mehrspurigen Straßen Vorteile für die Navigation ergeben, z.B. Hinweise auf Spurwechsel.

In weiterer Ausgestaltung kann eine Übermittlung von Signalen, die die Informationen tragen, von stationären Sensoren an Fahrzeuge erfolgen. Dabei werden stationäre Sensoren, z.B. induktive Kontaktschleifen, die Fahrzeuge erkennen können und zusätzlich mit einer Übertragungseinheit,

z. B. Funk, zur Sendung der Informationen an Fahrzeuge mit einer Kommunikationseinheit ausgerüstet sind, benutzt werden. Somit wird die GPS-Position durch die Daten derartiger stationärer Sensoren gestützt bzw. ergänzt.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnung

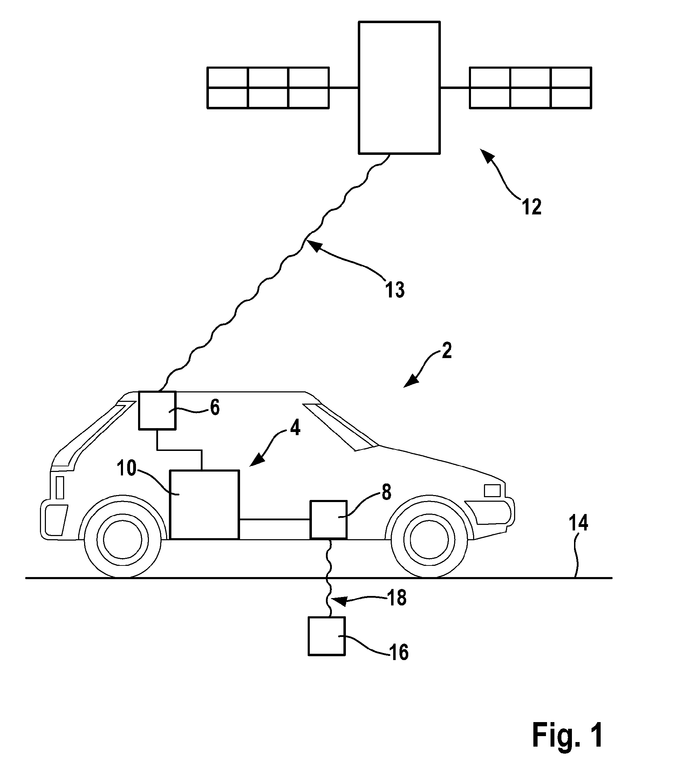

- Figur 1: zeigt in schematischer Darstellung ein Fahrzeug, das eine Ausgestaltung der erfindungsgemäßen Vorrichtung bei Ausführung einer Ausgestaltung des erfindungsgemäßen Verfahrens, aufweist.

### Ausführungsform der Erfindung

Die Erfindung ist anhand einer Ausführungsform in der Zeichnung schematisch dargestellt und wird im folgenden unter Bezugnahme auf die Zeichnungen ausführlich beschrieben.

Figur 1 zeigt in schematischer Darstellung ein als Kraftfahrzeug ausgebildetes Fahrzeug 2, das eine Ausführungsform 4 einer erfindungsgemäßen Vorrichtung aufweist. Dabei umfasst diese Vorrichtung 4 ein erstes als Empfänger ausgebildetes Ortungsmodul 6, ein zweites als Sensor ausgebildetes Ortungsmodul 8 sowie ein Datenverarbeitungsmodul 10, das hier eine Recheneinheit aufweist.

Außerdem zeigt Figur 1 in schematischer Darstellung einen von mehreren Satelliten 12 eines Positionsbestimmungssystems als eine erste Informationsquelle, wobei vorgesehen ist, dass dieser Satellit 12 mit dem ersten Ortungsmodul 6 erste Informationen 13 empfängt, so dass auf Grundlage dieser ersten Informationen 13 die Vorrichtung 4 eine Position des Fahrzeugs 2 bestimmen kann.

Es ist vorgesehen, dass unterhalb einer Fahrbahnoberfläche 14, auf der sich das Fahrzeug 2 bewegt, eine stationär installierte Einrichtung 16 als eine zweite Informationsquelle angeordnet ist. Das zweite Ortungsmodul 8 der Vorrichtung 4 ist dazu ausgebildet, von der stationär installierten Einrichtung 16 zweite Informationen 18 zu empfangen. Die Position wird hier in der fest installierten Einrichtung 16 berechnet. Die zweiten Informationen 18 umfassen folglich die Position des Fahrzeugs 2. Weiterhin umfassen die zweiten Informationen 18 eine exakte Position der stationär installierten Einrichtung 16. Die ersten und die zweiten Informationen 13, 18 sind voneinander unabhängig.

Bei Durchführung des Verfahrens werden die ersten Informationen 13 und die zweiten Informationen 18, die von den beiden Ortungsmodulen 6, 8 erfasst werden, in dem Datenverarbeitungsmodul 10 der Vorrichtung 4 miteinander kombiniert, wobei in vorliegender Ausführungsform vorgesehen ist, dass die ersten Informationen 13 von dem Positionsbestimmungssystem durch die zweiten Informationen von der fest installierten Einrichtung 16 ergänzt und dabei korrigiert werden.

## Patentansprüche

1. Verfahren zum Bestimmen einer Position eines Fahrzeugs (2), bei dem erste Informationen (13), die von einem Positionsbestimmungssystem bereitgestellt werden, und zweite Informationen (18), die von mindestens einer stationär installierten Einrichtung (16) bereitgestellt werden und von den ersten Informationen (13) unabhängig sind, kombiniert werden.

2. Verfahren nach Anspruch 1, bei dem die ersten Informationen (13) durch ein globales Positionsbestimmungssystem bereitgestellt werden.

3. Verfahren nach Anspruch 1 oder 2, bei dem die zweiten Informationen bereitgestellt werden, wenn sich das Fahrzeug (2) in der Nähe der mindestens einen stationär installierten Einrichtung (16) befindet.

4. Verfahren nach einem der voranstehenden Ansprüche, bei dem mindestens ein in dem Fahrzeug angeordnetes Ortungsmodul (8) und die mindestens eine stationär installierte Einrichtung (16) zur Bereitstellung der zweiten Informationen (18) miteinander wechselwirken.

5. Verfahren nach einem der voranstehenden Ansprüche, bei dem die ersten Informationen (13) mit den zweiten Informationen (18) korrigiert werden.

6. Vorrichtung zum Bestimmen einer Position eines Fahrzeugs (2), die dazu ausgebildet ist, erste Informationen (13), die von einem Positionsbestimmungssystem bereitgestellt werden, und zweite Informationen (18), die von einer stationär installierten Einrichtung (16) bereitgestellt werden und von den ersten Informationen (13) unabhängig sind, zu kombinieren.

7. Vorrichtung nach Anspruch 6, die in dem Fahrzeug (2) angeordnet ist.

8. Vorrichtung nach Anspruch 6 oder 7, die mindestens ein erstes Ortungsmodul (6) aufweist, das dazu ausgebildet ist, die ersten Informationen (13) von dem globalen Positionsbestimmungssystem zu empfangen.

9. Vorrichtung nach einem der Ansprüche 6 bis 8, die mindestens ein zweites Ortungsmodul (8) aufweist, das dazu ausgebildet ist, zweite Informationen (18) von der mindestens einen stationär installierten Einrichtung zu empfangen.

10. Computerprogramm mit Programmcodemitteln, um alle Schritte eines Verfahrens nach einem der Ansprüche 1 bis 5 durchzuführen, wenn das Computerprogramm auf einem Computer oder einer entsprechenden Recheneinheit, insbesondere in einer Vorrichtung (4) nach einem der Ansprüche 6 bis 9, ausgeführt wird.

11. Computerprogrammprodukt mit Programmcodemitteln, die auf einem computerlesbaren Datenträger gespeichert sind, um alle Schritte eines Verfahrens nach einem der Ansprüche 1 bis 5 durchzuführen, wenn das Computerprogramm auf einem Computer oder einer entsprechenden Recheneinheit, insbesondere in einer Vorrichtung (4) nach einem der Ansprüche 6 bis 9, ausgeführt wird.
